# EUROPEAN PATENT SPECIFICATION

(11) **EP 3 233 446 B1**
(45) Date of publication and mention of the grant of the patent: **21.08.2019**
(21) Application number: 15813545.9
(22) Date of filing: 17.12.2015
(51) Int. Cl.: B29D 11/00

(54) **METHOD AND APPARATUS FOR DEMOLDING CONTACT LENS**
VERFAHREN UND VORRICHTUNG ZUR ENTFORMUNG VON KONTAKTLINSEN
PROCÉDÉ ET APPAREIL DE DÉMOULAGE DE LENTILLES DE CONTACT

(30) Priority: 19.12.2014 GB 201422763
(43) Date of publication of application: 25.10.2017
(73) Proprietor: CooperVision International Holding Company, LP, St. Michael (BB)
(72) Inventor: GIBSON, John Robert, Eastleigh Hampshire SO53 4LY (GB); COOK, Terence Michael, Beccles Suffolk NR34 7TE (GB); COOK, James Bryan, Beccles Suffolk NR34 7TE (GB)
(74) Representative: Abel & Imray
(86) International application number: PCT/GB2015/054051
(87) International publication number: WO 2016/097739

(56) References cited:
- EP-A2- 1 752 280
- US-A1- 2007 092 594
- US-B2- 7 799 248

## Description

### FIELD

The disclosure relates to the field of ophthalmic lens manufacture, and in particular methods and apparatus for demolding of contact lens mold assemblies, including contact lens mold assemblies having an interference fit.

### BACKGROUND

With the increased demand for disposable contact lenses, manufacturers have been driven to find methods and apparatus that allow for automatic, high quality production of contact lenses, including new methods and apparatus for demolding contact lenses (i.e., the separation of a female mold member and a male mold member used in a contact lens mold assembly to make a cast molded contact lens). Such methods and apparatus must be fast, efficient, and cost effective.

Previously described contact lens demolding methods and apparatus typically are time consuming, require complicated equipment, and/or do not function well when there is variability in the spacing between the mold portions of a mold assembly. Following the use of many of these methods, the locations and positions of the separated mold portions can be somewhat unpredictable, which makes automation of the method much more challenging and prone to errors. Additionally, many previously described contact lens demolding methods and apparatus may require a treatment such as heating, applying liquid, or applying a surfactant, to reduce the amount of mechanical force required during mechanical separation. Such methods and apparatus do not provide rapid and efficient enough demolding, low equipment down times, and high enough yields of undamaged lenses, to support high-speed manufacturing lines. The need to apply a force-reducing treatment can further increase the time required to achieve demolding, can damage lenses and reduce yields, and can further increase the complexity of the process and equipment required. Thus, there remains a need for fast, efficient, and cost-effective demolding methods and apparatus.

EP 1752280 A2 discloses methods and apparatus for separating mold sections, removing a lens product from the separated mold sections, and transferring the lens product to a processing tray. The methods include contacting assembled mold sections with a warm fluid to break fused portions between the mold sections, and using one or more wedge shaped elements to pry apart and separate the mold sections, one from the other. A vacuum head having multiple vacuum ports is employed for lifting the newly molded lens product from a mold section and for releasing the lens from the vacuum head into a processing tray. A cylinder of flowing air directed around the circumference of the lens is effective to maintain the lens in an unfolded position as the lens is being released into the processing tray. A tray set including multiple trays holding multiple lenses is provided and includes features for enabling visual and/or mechanical distinction of the trays and lenses held thereby.

US 7 799 248 discloses compositions and methods for improving demolding polar resin molds used in the production of silicone hydrogel materials. The present compositions and methods include the use of one or more reactive demolding agents. The reactive demolding agents react with components of a polymerization mixture to produce a polymerized silicone hydrogel device containing a reactant product of the demolding agent and the other components of the polymerization mixture. Polar resin molds used during the polymerization of the polymerization mixture are more easily separated than substantially identical molds used in the polymerization of a substantially identical material without a reactive demolding agent. The present compositions and methods may be used in the manufacture of silicone hydrogel lenses, such as contact lenses. The demolding aids may also be useful as delensing aids.

### SUMMARY

According to a first aspect and independent claim 1, the present disclosure is directed to a contact lens demolding apparatus comprising a separator and a driver, as defined in claim 1. The separator comprises a curved wedge having a leading end, a trailing end, a circumferential outer edge, a circumferential inner edge, a concentric central axis, an increasing thickness circumferentially from the leading end towards the trailing end, and an increasing radial thickness from the outer circumferential edge towards the central axis. The driver is configured for rotating the separator around its concentric central axis.

The contact lens demolding apparatus can further comprise a contact lens mold assembly, wherein the contact lens mold assembly comprises of a first mold portion, a second mold portion, and a polymerized contact lens body contained between the first mold portion and the second mold portion.

The contact lens demolding apparatus of the disclosure can effectively separate a contact lens mold assembly without requiring the use of heat, surfactants, or a liquid. The contact lens demolding apparatus of the disclosure is particularly effective at demolding mold assemblies that are held together primarily by an interference fit. The shape of the separator of the present disclosure enables it to be surprisingly effective at separating a contact lens mold assembly, especially an interference fit mold assembly, when it is rotated by a driver around its concentric central axis so to be directed between a part of a first mold portion and another surface. The separator of the present disclosure allows a contact lens assembly to be separated with minimum mechanical force and with little or no damage to the lens or mold assembly.

The apparatus can include the contact lens mold assembly. The first mold portion and the second mold portion of the mold assembly can be joined together by an interference fit. The first mold portion can comprise at least two peripheral flanges. The apparatus can include a rotation stopper, abutment, or other means herein referred to as a flange tab, for preventing rotational movements of at least one of the first mold portion and the second mold portion during demolding of the mold assembly.

The circumferential inner edge of the separator can have a curvature selected to fit around an outer periphery of the mold assembly.

The driver can comprise a retaining driver portion connected to the separator, and a motor for rotationally driving the retaining driver portion.

The apparatus can further comprise a holder for receiving the mold assembly. The holder can comprise a recess corresponding to an external shape of the mold assembly.

The apparatus can include a gripper for holding and retaining the mold assembly in a stationary position.

The apparatus can include a collector for collecting a separated first mold portion or a separated second mold portion of a separated mold assembly.

According to a second aspect and independent claim 10, the disclosure provides a method of manufacturing a contact lens, as defined in claim 10. The method comprises:
- providing a contact lens mold assembly, the mold assembly comprising a first mold portion, a second mold portion, and a polymerized contact lens body contained between the first mold portion and the second mold portion;
- providing a separator comprising a curved wedge having a leading end, a trailing end, a circumferential outer edge, a circumferential inner edge, a concentric central axis, an increasing thickness circumferentially from the leading end towards the trailing end, and an increasing radial thickness from the outer circumferential edge towards the central axis;
- providing a driver for rotating the separator around its concentric central axis; and
- rotating the separator around its concentric central axis and directing the separator between a part of the first mold portion and another surface, so that the first mold portion and the second mold portion of the mold assembly are separated from one another.

In the method of the disclosure, the separating of the two mold portions of the mold assembly is achieved by rotating the separator around its concentric central axis and directing the separator between a part of the first mold portion and another surface, separating the mold assembly. The separating is achieved by the wedged parts of the separator moving between those parts. During the rotating and directing, the wedged parts of the separator apply an upwards and forwards force on the upper mold portion relative to the lower mold portion of the mold assembly. The separation is particularly effective due to the curved and doubly wedged shaped of the separator. The first mold portion and the second mold portion can be held together at least in part by an interference fit.

The first mold portion can include at least one peripheral flange. The contact lens mold assembly can be provided in a holder, and the rotating can direct the separator between a peripheral flange of the first mold portion and the upper surface of the holder.

The method can further include using a collector head to open the mold assembly by removing the first mold portion of the separated mold assembly from the second mold portion.

The method can further include, during the rotating, using a gripper to hold and retain the mold assembly in a stationary position.

Rotating the separator can comprise rotating the separator around a length of an outer periphery of the mold assembly. The separator can be rotated in a direction with the leading end first.

The method can be a method wherein, following the separating, the separated first mold portion remains sitting on a surface of the separated second mold portion.

The method of the disclosure can be a method which is free of a step of contacting the mold assembly with a liquid, or heating the mold assembly prior to or during the rotating. The method can further be free of a step of using a compound that reduces a force required to separate the first mold portion and the second mold portion during the rotating and directing.

### BRIEF DESCRIPTION OF THE DRAWINGS

FIG. 1 is a schematic cross section of an example of a contact lens mold assembly.
FIG. 2 is a schematic cross section of a demolding apparatus according the disclosure, further including a contact lens mold assembly in the holder of the demolding apparatus.
FIG. 3 is a schematic plan view of the demolding apparatus of FIG. 2.
FIGS. 4a and 4b show the demolding apparatus of FIGS. 2 and 3, respectively, without a contact lens mold assembly in the apparatus.
FIGS. 5a to 5g are various schematic plan views of the separator and retaining driver portion of figures 2 and 3 shown from several angles.
FIGS. 6a to 6e are various schematic views of the separator and retaining driver portion in relation to a mold assembly.
FIG. 7 is a schematic view of a demolding station as part of a contact lens manufacturing array arranged on a circular turntable.

### DESCRIPTION

As previously stated, the present disclosure is directed to methods and apparatus for demolding contact lenses. All features and steps described herein are applicable to both the methods and the apparatus of the present disclosure.

The contact lens of the present disclosure is understood to include any ophthalmic lens that can be worn directly on the eye. A contact lens according to the present disclosure can be a corrective contact lens, for example, used to treat a condition selected from myopia, hyperopia, astigmatism, presbyopia, and color deficiencies. Alternatively or additionally a contact lens can be cosmetic, i.e., designed to change the appearance, for example, the color, of the eye. A contact lens of the present disclosure can also be a therapeutic contact lens, for example, a contact lens used to protect a damaged or diseased cornea. The present disclosure may also be applicable to other cast-molded ophthalmic lenses, including intraocular lenses and the like.

The contact lens of the present disclosure can be a rigid contact lens or a soft contact lens, such as, for example, a soft conventional hydrogel contact lens or a silicone hydrogel contact lens.

A contact lens, in particular, a soft contact lens, is generally cast-molded by polymerizing a monomer or monomer mixture in a plastic contact lens mold assembly, for example, in a polypropylene mold assembly. A mold assembly for a contact lens is generally a two-piece mold, with a first mold portion (male mold portion) having a generally convex lens surface and a second mold portion (female mold portion) having a generally concave lens surface. The mold assembly defines an internal cavity having the shape of the final desired lens. To form a cast-molded contact lens body, a portion of a polymerizable composition is generally placed in the concave lens surface, and the convex lens surface is then placed on top of the concave lens surface, trapping the polymerizable composition in the lens-shaped internal cavity.

The contact lens mold assembly is closed during the process of forming a contact lens in the cavity of the mold, i.e., the first mold portion and the second mold portion including the polymerizable composition are brought together into direct contact with each other, forming the lens-shaped internal cavity.

Once the mold assembly has been closed, various means of holding together the portions of the contact lens mold assembly can be employed. For example, interference fittings on each of the portions of the mold assembly can come together to form an interference fit. Other methods of fixing the mold assembly together can include heat or ultrasonic welding of the mold portions. Any or all of these various methods and means for holding together the portions of the contact lens mold assembly can be used in accordance with the present disclosure.

The mold assembly can comprise a two-part mold assembly comprising two mold portions, or can comprise more than two parts, for example 3, 4, 5, or 6 parts. The demolding apparatus and method of the present disclosure have been found to be particularly effective for demolding a two-part contact lens mold assembly, including a two-part contact lens mold assembly that is held together at least in part by an interference fit formed between the two mold portions.

Once the mold assembly has been filled with the polymerizable composition and closed, the mold assembly can then be exposed to conditions that produce a polymerization reaction of the polymerizable composition. The conditions can include UV light, or heat, and can result in the polymerizable composition polymerizing to form a polymerized lens body. When a contact lens is molded in a mold assembly, the polymerizable composition is generally provided in excess such that on polymerization excess material forms an annular flange or ring around the formed lens and/or the mold portions. This excess material is known as flash.

Following the formation of the polymerized lens body in the mold assembly, it is necessary to open the mold assembly by separating its mold portions, so that the lens body formed in the lens-shaped cavity of the mold assembly can then be removed and processed further. This process is referred to as demolding.

A demolding step is used in the manufacture of contact lenses to separate and open a mold assembly in which a contact lens body has been formed so that the contact lens is accessible for further processing. Demolding apparatus is the equipment required for a demolding step, i.e., the necessary equipment to separate and open a mold assembly. Demolding commonly follows a curing or polymerization step, in which the lens body is formed in the mold. It can also follow a step of heating the mold assembly and/or a step of submersion of the mold assembly in a liquid. For the demolding process of the present disclosure, however, such heating and submersion steps are often not required due to the efficiency of the demolding apparatus and method.

After the mold assembly has been separated in a demolding step, a delensing step, which comprises the removal of the contact lens from a separated and opened mold portion, can follow. Delensing can then be carried out using various methods, for example, by using a vacuum head, by floating the lens off of the opened mold portion by immersing the opened mold portion in liquid, by deforming the remaining opened mold portion, by blowing the lens from the opened mold portion with air, or by using any combination thereof.

According to one or more embodiments of the present disclosure, the demolding apparatus is for demolding a mold assembly comprising a first mold portion and a second mold portion, wherein the first mold portion comprises a lens surface, a curved outer periphery extending continuously around the lens surface, and one, two or more peripheral flanges, and wherein the second mold portion comprises a lens surface, a curved outer periphery extending continuously around the lens surface, and zero, one, two or more peripheral flanges. The lens surface of the first mold assembly can be convex in shape and the lens surface of the second mold assembly can be concave in shape. Alternatively, the first mold portion can have a generally concave lens surface and the second mold portion can have a generally convex lens surface.

The curved outer periphery of the mold portion can be annular in shape and can extend continuously around the lens molding surface. The outer surface of the outer periphery can be continuous or can have regular or irregular breaks in the outer surface. In a particular example, the outer surface of the outer periphery can be continuous. The curvature of the curved outer periphery can be the same as the curvature of the inner edge of the separator of the demolding apparatus of this disclosure.

The first mold portion can also be referred to as an "upper" mold portion. The second mold portion can also be referred to as a "lower" mold portion. That is because during the manufacturing process of a contact lens using a two part mold assembly, generally the first mold portion will sit above the second mold portion, with the lens molding surface of the first mold portion being the upper surface of the first mold assembly and the lens molding surface of the second mold assembly being the lower surface of the second mold assembly.

Either mold portion, or both, can include a peripheral flange. The peripheral flange can be a projection, extension, or lip that extends from the outer periphery away from the center of the mold portion. A peripheral flange can extend around a portion of the outer periphery of a mold portion. A peripheral flange can extend around, for example, between 1% and 50%, between 1% and 25%, between 3% and 20%, between 3% and 15%, between 5% and 15%, or between 8% and 13%, of the outer periphery of a mold portion. A flange can be any regular or irregular shape in plan view, for example, a 3 or more sided shape or any shape with curved sides. For example, a peripheral flange can be square, rectangular, or semicircular. If more than one peripheral flange is present on the first mold portion, the flanges can be the same or different. For example, the peripheral flanges can extend around the outer periphery of a mold portion in the same area or a different area, and they can be the same shape or different shapes. If peripheral flanges are present on the first mold portion and the second mold portion, the peripheral flanges can be the same or different. For example, they can extend around the outer periphery of a mold portion in the same area or a different area and they can be the same shape or different shapes.

Where more than one flange is present on a mold portion, the flanges can be spaced exactly or approximately equidistant apart or can be unevenly spaced around the periphery of the mold assembly. If both mold portions have more than one flange, the spacing of the flanges can be approximately the same on each mold portion. In a particular example, the upper and lower mold portions can each have two flanges that are spaced exactly or approximately equidistant apart.

The methods and assemblies of the present disclosure are particularly effective in demolding contact lens mold assemblies in which there is some variation between the spacing of the flanges between the mold assemblies. When in use, the demolding apparatus moves around the outer periphery of a mold assembly so that it is directed between a part of the upper mold portion and another surface, for example, between a peripheral flange of the upper mold assembly and another surface. The peripheral flange of the upper mold portion can be near the leading end of the separator, or at some position further around the periphery of the mold assembly. Alignment of the separator with a peripheral flange on the upper mold portion is not necessary for separation of the mold assembly to be successful. The position of the peripheral flange can vary as long as it is positioned in the pathway of rotation of the separator. Unlike the curved separators of the present disclosure, linear separators are not effective if the alignment of the separator and the part of the mold assembly where separation is achieved is not precise, due to the single point of contact between the separator and mold assembly. If they are misaligned, a linear separator simply misses that part of the mold assembly, and no separation is achieved. The shape and movement of the separator of the demolding apparatus of the present disclosure leads to a more reliable and consistently effective demolding step.

The mold portion can be made of any suitable material, for example, a plastic material including an injection molded thermoplastic, for example, polypropylene, polystyrene, an ethylene-vinyl alcohol copolymer, or another type of vinyl alcohol copolymer, for example, a water-soluble vinyl alcohol copolymer. The mold portion can be formed of a first injection molded thermoplastic material that has been coated with a second polymeric material.

The demolding apparatus of the present disclosure comprises a separator. The separator of the present disclosure is for separating a contact lens mold assembly. The separator is the part of the demolding apparatus that applies a mechanical force to the mold assembly, resulting in the mold assembly separating into two or more mold portions, for example, due to disconnection of the means holding the mold assembly closed. Where the mold assembly comprises two mold portions, the separator will separate the assembly into two mold portions that are detached from each other, but that can still be in contact with one another. The separator can break the interference fit or other types of fixings holding the mold assembly portions closed and together. After the mold assembly is separated, the mold assembly can be opened so that a contact lens formed in the mold assembly cavity is accessible.

The separator of the disclosure comprises a curved wedge having a leading end, a trailing end, a circumferential outer edge, a circumferential inner edge, a concentric central axis, an increasing thickening circumferentially from the leading end towards the trailing end, and an increasing radial thickness from the outer circumferential edge towards the central axis.

The separator of the disclosure can be capable of opening a mold assembly before the separator has made a complete rotation.

The curved wedge of the disclosure can be semi-annular or demi-annular in shape, for example, arc-shaped, c-shaped, or partially ring-shaped. Where the curved wedge is partially ring-shaped, it can comprise a ring that extends between 15 and 270 degrees, for example, between 30 and 270 degrees, between 45 and 180 degrees, between 60 and 180 degrees, between 90 and 160 degrees, or between 120 and 150 degrees, along an arc. The separator of the disclosure can have a constant curvature around its inner circumferential edge, or the curvature of the circumferential inner edge can vary. In one particular example, the separator of the disclosure can have a constant curvature. The curvature of the separator can be arranged so as to fit exactly around a portion of the outer periphery of a mold assembly.

The separator can be made of a single material or multiple materials. In one particular example it can be made of a single material, for example, of a one-piece, unitary, and/or monolithic construction. The separator of the disclosure can be made of a metal, including a pure metal, an alloy, a plastic, or another resilient material. In another particular example, the separator can be made of metal or plastic. The separator can be molded or shaped into its shape. The outer surface of the separator can be coated with a coating of another material to reduce friction, improve wear, or for reasons of hygiene.

The separator of the disclosure has a leading end and a trailing end. The leading end is the end of the separator that leads the rotation when the wedge is rotated to separate a mold assembly. It can also be referred to as the front end. The leading end of the separator can come into contact with a stopper to stop further rotation of the separator after the separator has separated a mold assembly. The trailing end is the rear end of the separator, which follows behind the leading end when the wedge is rotated to separate a mold assembly. The trailing end can come into contact with a stopper to stop rotation of the wedge when the wedge is rotated back to its original position where it was before it was moved to separate a mold assembly.

The end surface of the leading end can be substantially flat or curved. In a particular example, the leading end can be substantially flat. When the leading end is flat it can be angled or substantially vertical. In another particular example, the leading end can be substantially vertical. Where the surface of the leading end is substantially flat and substantially vertical, the end can be referred to as a blunt leading end. The trailing end can be substantially flat or curved, and when it is substantially flat it can be angled or substantially vertical. In another particular example, the trailing end can be substantially flat and substantially vertical. Where the demolding apparatus further comprises a stopper, the surface of the stopper can have substantially the same features, or complementary features, as the surface of the leading end and/or trailing end.

The average height (i.e., average thickness) of the leading end of the separator can be less (i.e., thinner) than the trailing end. The leading end of the separator is arranged to fit between a part of a first mold portion of a mold assembly, for example, a peripheral flange, and another surface, for example, the upper surface of a holder or the upper surface of a peripheral flange on a second mold portion. The trailing end is arranged to be too thick to fit between a part of a first mold portion of a mold assembly, for example, a peripheral flange, and another surface, for example, the upper surface of a holder or the upper surface or a peripheral flange on a second mold portion.

The upper edge of the leading end can be curved to connect the leading end of the wedge to the upper surface of the wedge and to the top of the inner and outer circumferential edges of the wedge. The curvature of the upper edge of the leading end can be shallow or steep. In a particular example, it is steep.

The separator of the disclosure has a circumferential outer edge and a circumferential inner edge. The circumferential outer edge can be longer that the circumferential inner edge. The circumferential outer edge and a circumferential inner edge can be parallel, that is, the distance between the circumferential outer edge and the radially arranged circumferential inner edge can remain constant along the separator. In a particular example, the outer edge and inner edge are parallel. The circumferential inner edge can be a smooth, continuous curve.

In a particular example, the circumferential inner edge of the separator can have the same curvature as the whole or a part of the outer periphery of the mold assembly for which the demolding apparatus is designed to demold. The circumferential inner edge of the separator can be arranged to fit exactly around a part of the curved outer periphery of a mold portion.

The curved wedge of the separator of the disclosure, and thus, the separator in general, has a concentric central axis. The concentric central axis is the co-axial concentric central axis of the circumferential outer edge and the circumferential inner edge. For example, if the inner and outer circumferential edges were full circles, the concentric central axis would be the origin of those two circles. When the apparatus of the present disclosure is used in a demolding step to separate a mold assembly, the mold assembly is present at the concentric central axis of the separator.

The separator of the disclosure has an increasing thickness circumferentially from the leading end towards the trailing end. The increase in thickness can be continuous or can intermittently increase before, after, and/or between an area where the thickness is constant (a plateau), or can increase then plateau, or can plateau then increase. The increase in thickness can be constant from the leading end to the trailing end (i.e., the slope of the wedge from the leading end to the trailing end can be at a steady angle) or the angle of increase can vary from the leading end to the trailing end (i.e., the slope of the wedge from the leading end to the trailing end can vary). The angle of increase can be from about 1 degree to about 60 degrees, for example, from about 1 degree to about 45 degrees, from about 3 degrees to about 30 degrees, from about 3 degrees to about 20 degrees, from about 5 degrees to about 15 degrees, or about 5, 6, 7, 8, 9, 10, 11, 12, 13, 14, or 15 degrees. In one particular example, the angle of increase of circumferential thickness is an angle of about 11 degrees.

The separator of the disclosure has an increasing radial thickness from the outer circumferential edge towards the central axis. The cross sectional thickness of the separator at any point along the curve of the wedge is thicker at the inner circumferential edge than the outer circumferential edge. The increase in thickness can be continuous or can intermittently increase, with areas where the thickness is constant before, after, and/or between the areas where the thickness increases. The increase in thickness can be constant from the outer circumferential edge towards the central axis (i.e., the slope of the wedge from the outer circumferential edge towards the central axis is at a steady angle) or the angle of increase can vary from the outer circumferential edge towards the central axis (i.e., the slope of the wedge from the outer circumferential edge towards the central axis varies). The angle of increase can be from about 1 degree to about 60 degrees, from about 1 degree to about 45 degrees, from about 3 degrees to about 30 degrees, from about 3 degrees to about 20 degrees, from about 5 degrees to about 15 degrees, or about 5, 6, 7, 8, 9, 10, 11, 12, 13, 14, or 15 degrees. In one particular example, the angle of increase of radial thickness can be an angle of about 11 degrees.

The angle of increase in radial thickness from the outer circumferential edge towards the central axis can be the same as the angle of increase of thickness circumferentially from the leading end towards the trailing end, or it can be different. In a particular example, the angles of increase can be the same.

The upper face of the separator is connected to the outer circumferential edge and the inner circumferential edge. The upper face can be a flat, even slope, a step-wise slope, a slope with variations in its slope angle, or curved in a convex or concave manner. In a particular example, the upper face can be a flat, even slope. The lower face of the curved wedge can be substantially flat and substantially horizontal.

The parts of the separator that connect the ends, circumferential edges, and faces of the separator can comprise curved or square edges, can include cut-out portions, and/or can comprise any combination of edge types. In a particular example, the upper face and the inner circumferential edge can be joined by a curved edge.

It has been found that the demolding methods and apparatus of the present disclosure are particularly effective in demolding contact lens mold assemblies that are held together by one or more interference fittings. It is believed that this is due to the curved and doubly wedged shape of the separator, and also can be due to the length of the separator. The length of the inner circumferential edge of the separator can be less than the circumference of the mold assembly. This allows it to rotate around the circumference of the mold assembly. The lengths of known linear separators are significantly longer than the circumference of a mold assembly, and require a longer contact time with a mold assembly. Therefore, demolding with such linear separators is slower, less predictable, and less convenient compared to separation using the apparatus and methods of the present disclosure.

The demolding apparatus of the disclosure also comprises a driver for rotating the separator around its concentric central axis. The driver can comprise a retaining driver portion and a motor for driving the retaining driver portion. The retaining driver portion can be an element directly or indirectly connected to the separator that can drive and direct the separator to rotate or revolve when powered by the motor. In a particular example, the retaining driver portion can be directly connected to the separator and/or it can be directly connected by being permanently or non-permanently attached to one or more surfaces of the separator. The separator can be permanently attached to the retaining driver portion by forming or molding the separator and retaining driver portion from a single piece of material. Alternatively, the retaining driver portion can be fixed to the separator by a permanent fixing means, such as permanent adhesive or one or more permanent fasteners. The fastener can be a separate element to the separator or retaining driver portion, or one or both of the separator and retaining driver portion can comprise a fastener for fastening the two components together, such as permanently interlocking elements. Alternatively, the retaining driver portion can be non-permanently directly connected to the separator. This arrangement can find utility in an example where the size of the separator needs to be modified for different shaped and sized mold assemblies. The separator and retaining driver portion can be non-permanently directly connected using temporary fixing means, such as temporary fasteners, or it can be that the separator and/or retaining driver portion comprises a means for temporally fastenings the two components, such as a screw and threaded bore, or interlocking elements that can be disconnected.

The connection between the retaining driver portion and separator can be across a portion of an area on a surface of the separator. In a particular example, they are not connected across an entire surface. The retaining driver portion can be connected to the separator on any surface of the separator, for example, on the upper face, the lower face, the leading end, the trailing end, the outer circumferential edge, or the inner circumferential edge. It can be connected on one surface or on more than one surface, for example, on two or three or four surfaces. In a particular example, the retaining driver portion can be connected to the separator on a portion of the upper face, on a portion of the lower face, on the upper face and outer edge, on the lower face and outer edge, or on the upper face, the lower face, and the outer edge. In another particular example, the retaining driver portion is not connected on or near an area on the separator that is directly between a part of an upper mold portion and another surface, for example, between the leading end and the inner circumferential edge.

The retaining driver portion can drive the separator by rotating it forward or backward around its central axis when driven by the motor of the driver, for example, by pushing and/or pulling and/or dragging the separator. In a particular example, the retaining driver portion can drive the separator by pushing or pulling it forward around its central axis, with the leading end first. In a particular example, the retaining driver portion can also drive the separator backwards by pushing or pulling it backwards around its central axis, with the trailing end first.

Alternatively, the retaining driver portion can be connected to the mold assembly but not connected to the separator. In a particular example, when the retaining driver portion is connected to the mold assembly, it can be connected by a non-permanent, direct or indirect connection, for example, using a suction head, and the mold assembly can be rotated about its central axis by a motor. For example, the retaining driver portion can be connected to the lower or upper surface of a mold assembly and the retaining driver portion can drive the mold assembly so it rotates about its central axis.

The motor of the driver can comprise any means capable to drive the retaining driver portion to rotate the separator. The motor can be any conventional motor suitable for powering the rotation of the retaining driver portion and separator. The motor can be electrically powered. The motor can comprise a stepper motor. The motor can comprise a spring or other compressive or tensile source of motive force.

The demolding apparatus of the disclosure can further comprise a stopper for stopping rotation of the separator. As the separator of the disclosure can be capable of opening a mold assembly before a complete rotation of the separator, the stopper can prevent a complete and/or multiple consecutive rotations of the separator about its central axis when driven by the driver.

The stopper can be any resilient element capable of stopping movement of the separator and/or movement of the retaining driver portion. In a particular example, the stopper can directly stop the movement of the separator. The stopper can be configured to stop the movement of the separator and indirectly prevent further movement of the retaining driver portion. The stopper can be, for example, a resilient, stationary element that is positioned in the rotational pathway of the separator. For example, the stopper can be a solid, longitudinally extending element with straight or curved edges. The stopper can be positioned so that the leading end or the trailing end, or both ends, of the separator can contact the stopper and be stopped by the stopper when the separator is rotated to a certain degree in a certain direction, by the driver. Alternatively, the stopper can be positioned in the pathway of the retaining driver portion, so the retaining driver portion can contact the stopper and be stopped by the stopper when the retaining driver portion is driven to a certain position by the motor of the driver.

The stopper of the disclosure can be capable of stopping the rotation of the separator and/or retaining driver portion when the separator is rotated in both directions around the concentric central axis of the separator. In another example, the stopper can be capable of stopping the rotation of the separator and/or retaining driver portion when the separator is rotated in one direction only. In this case, a second stopper can be used to stop the other rotational movement of the separator and/or retaining driver portion.

The stopper can be connected to any element of the demolding apparatus that will allow the stopper to be positioned to stop movement of the separator and/or the retaining driver portion. For example, the stopper can be positioned in the pathway of the separator and/or retaining driver portion. The stopper can remain stationary when stopping the separator and/or retaining driver portion. The stopper can be connected to the xyz stage of the demolding apparatus and can extend downwardly to the pathway of the separator. Alternatively, the stopper can be connected to a holder and can extend upwardly to the pathway of the separator.

The demolding apparatus of the disclosure can further comprise a rotation stopper, abutment, or other means, herein referred to as a flange tab, for preventing significant latitudinal movement of a mold portion during the demolding process, for example, to prevent significant latitudinal movement of the first mold portion. The significant latitudinal movement can be a significant rotational or twisting movement. The significant latitudinal movement can be, for example, movement of more than a 1 cm, movement of more than 0.5 cm, or movement of more than 0.2 cm. The flange tab can be made of any resilient material, for example, metal or resilient plastic. The flange tab can be a resilient tab or pin that can make a single point of contact with a peripheral flange, or it can be a jaw, claw, or clamp that can make two or more points of contact with a peripheral flange. In a particular example, the flange tab can be a tab or pin.

The flange tab can be connected to any element of the demolding apparatus that will allow the flange tab to be positioned or moved to prevent significant lateral movements of a mold portion, for example, it can be connected to a xyz stage or a holder. It can be positioned so that it can engage with a peripheral flange on a mold assembly, or so that it can engage with a peripheral flange if any lateral movement of that flange occurs. The position of the flange tab can be moved by the xyz stage. The flange tab, if present, can comprise a resilient, cylindrical pin that projects downwardly from the xyz stage. In a particular example, the flange tab can be positioned so that when the separator rotates around the mold assembly, the first mold assembly cannot rotate or twist. The flange tab can be positioned, for example, adjacent to and/or abutting one or more sides of a peripheral flange. In a particular example, it is not positioned adjacent to and/or abutting a peripheral flange on which the separator is to act to separate the mold assembly, i.e., the peripheral flange of the upper mold assembly nearest the leading end of the separator. The flange tab can be positioned adjacent to and/or abutting one or more sides of a peripheral flange that is not the peripheral flange nearest the leading end of the separator, for example, it can be positioned adjacent to and/or abutting one or more sides of the peripheral flange furthest from the leading end and/or nearest the trailing end of the separator. The flange tab can be positioned at least at the side of the peripheral flange furthest from the leading end of the separator.

The flange tab can be present and positioned as described so that when the separator rotates around the mold assembly the first mold assembly cannot rotate or twist. This can ensure that the separator moves between the peripheral flange nearest the leading end.

In a particular example, where there is only one peripheral flange on the upper mold assembly, the flange tab can be absent.

The demolding apparatus of the disclosure can further comprise a holder for receiving a mold assembly. The holder can be arranged to receive and support a mold assembly during a demolding step or method. The holder can be arranged to receive a mold assembly on its upper surface. The holder can have a substantially flat upper surface. The holder can comprise a recess on the upper surface of the holder to receive and support a mold assembly, or the holder can comprise a projection on the upper surface of the mold assembly to receive and support a mold assembly. The recess or projection can be shaped to accommodate a mold assembly, for example, the shape of the recess or projection can correspond to the shape of a mold assembly. In a particular example, the holder can comprise a recess shaped to accommodate a mold assembly.

In an example where the holder comprises a recess for receiving and supporting a mold assembly, the recess can be arranged so that the mold assembly is only partially within the recess, for example, so that only a lower portion of the second portion of the mold assembly is within the recess, with the first mold part and an upper part of the second mold portion being above the recess. This arrangement allows for a part of a peripheral flange on the first portion of a mold assembly to be available for the separator to contact. Where the holder has a projection for receiving and supporting a mold assembly, the projection can be arranged so that the mold assembly is only partially within the projection, for example, so that only a lower part of the second portion of the mold assembly is within the recess, with the first mold portion and an upper part of the second mold portion being above the projection. This arrangement allows for a peripheral flange on the first portion of a mold assembly to be available for the separator to contact.

The holder can further comprise an aperture extending through the body of the holder. When present, the aperture can be arranged to allow a gripper to move from below or within the holder towards a mold assembly positioned in the holder. It also can allow a gripper to be able to move away from the mold assembly, and optionally out of the aperture, to an area below the holder. Where the holder is arranged to have a recess or a projection for receiving and supporting a mold assembly, the aperture can be arranged to extend through the holder where the recess or projection is positioned.

The demolding apparatus of the disclosure can further comprise a gripper for holding and retaining a mold assembly in a stationary position during a demolding process. The gripper can be arranged to hold and retain a mold assembly in and/or on a holder.

When provided, the gripper of the disclosure can be any element suitable to grip a mold assembly or a mold portion of an assembly so that it can be held or retained in a stationary position during a demolding process, for example, held and retained in and/or on the holder. The gripper can comprise: a vacuum head; a suction head; one or more gripping fingers, hooks or loops; one or more interference fit connections; or another non-permanent type of connection. The gripper can comprise a positioner for moving the part of the gripper that performs the gripping function, for example, a robotic arm capable of moving vertically and/or laterally. In a particular example where the gripper comprises a vacuum head or suction head, the demolding apparatus can further comprise a vacuum or vacuum source connected to the head. In another particular example where the gripper comprises hooks or loops, a part of the assembly for engaging with the gripper can comprise loops or hooks.

The gripper can be positioned on, slightly above, below, or beside a surface of the mold assembly or can be moved to such a position by the positioner. In a particular example, the gripper can be positioned slightly below the mold assembly. In another particular example, the gripper can be positioned within or below the holder of the demolding apparatus. In yet another particular example, the gripper can be positioned below or within the aperture of the holder. In such an example, the gripper can be separate from or connected to the holder. In yet another particular example, the gripper can be separate from the holder.

The demolding apparatus of the disclosure can further comprise a collector for collecting a mold portion of a separated mold assembly. The collector can comprise or be separate from a separator configured to open a separated mold assembly. The collector can comprise a collection portion, for example, a vacuum head, a suction head, jaws, a clamp, a claw, or the like features or means that can pick up and carry a mold portion. The collector can also comprise a positioner, for example, a robotic arm capable of moving a collection portion vertically and/or laterally. In a particular example where the collector comprises a vacuum head, the demolding apparatus can further comprise a vacuum or vacuum source connected to the vacuum head. The collector can be positioned directly above the mold assembly. If not positioned above the mold assembly, the positioner or another element of the demolding apparatus can provide a feature or means to move the collector to the mold portion to be collected. In one or more other examples, a mover that moves the separated mold assembly to the collector, can be provided.

The demolding apparatus of the disclosure can further comprise an xyz stage for moving one or more of the separator, driver, stopper, flange tab, and/or collector, vertically and laterally. The xyz stage can move one or more of such elements as a unit. The xyz stage can move one or more of such elements, as a unit, vertically up, down, to, and/or from the upper surface of a holder. The xyz stage can move one or more of such elements, as a unit, laterally from above a holder or a manufacturing array platform, to a position away from the holder or platform, for example, to a position above a waste receptacle for disposal of a separated mold portion connected to a collector. In a particular example, the xyz stage can be at rest in an area above the position of a holder for receiving a mold assembly, and can return to such a position between demolding steps. The xyz stage can comprise a platform for connection directly or indirectly to one or more of the separator, driver, stopper, flange tab, and/or collector, and an xyz robotic arm for moving the platform with one or more of such elements connected to it.

The demolding apparatus of the disclosure can further comprise a waste receptacle for receiving mold portions collected by the collector. The waste receptacle can be a hollow container with an open upper end and a closed lower end for completely receiving multiple mold portions removed from separated mold assemblies that are to be disposed.

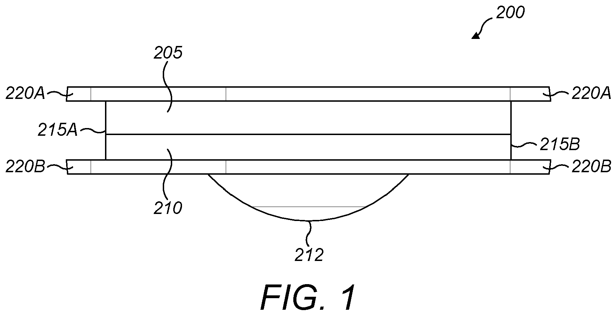

FIG. 1 illustrates an example of a mold assembly 200. Mold assembly 200 comprises a first mold portion 205 having an upper surface and a lower surface. The lower surface comprises a convex lens surface. FIG. 1 also shows the second mold portion 210 having an upper surface and a lower surface, wherein the upper surface comprises a concave lens surface. Both the first and second mold portions have a continuous annular outer periphery 215A and 215B connected to and extending around the lens surface. The first and second mold portions also each have two outwardly extending peripheral flanges 220: 220A on first mold portion 205 and 220B on second mold portion 210. A contact lens body is present in the mold cavity of the mold assembly, between the concave and convex lens surfaces.

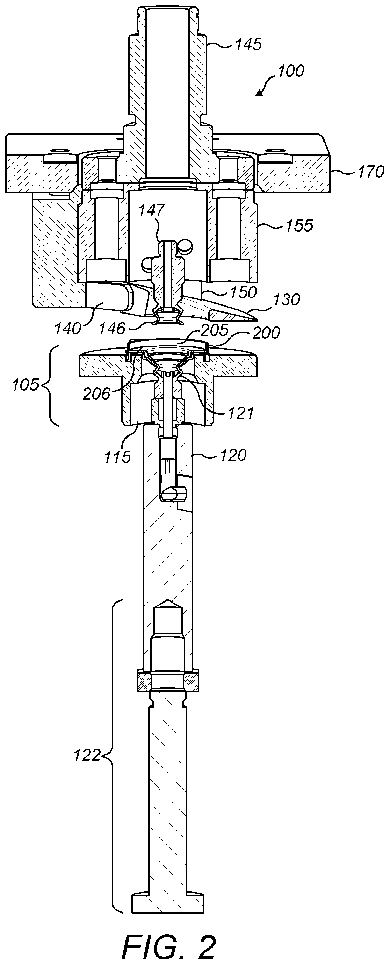

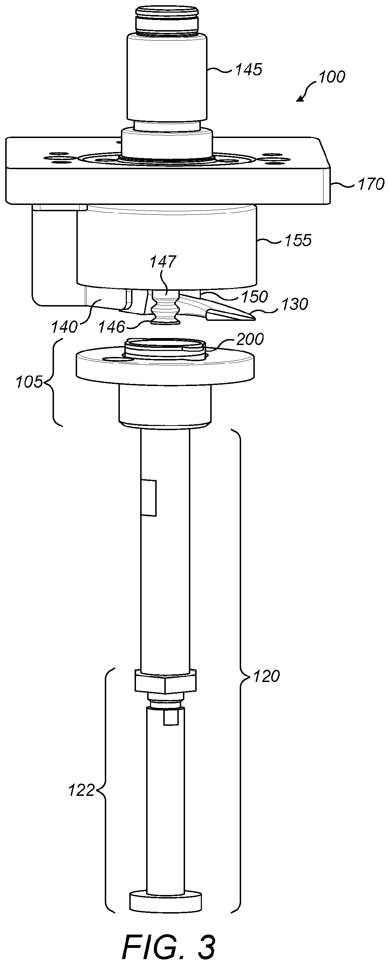

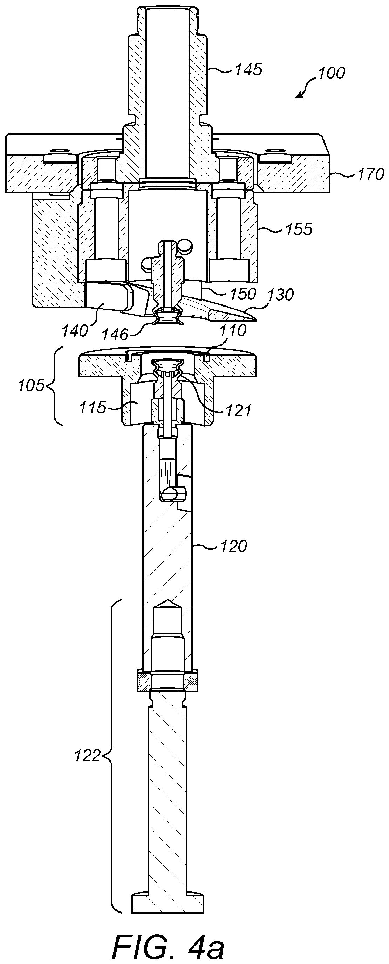

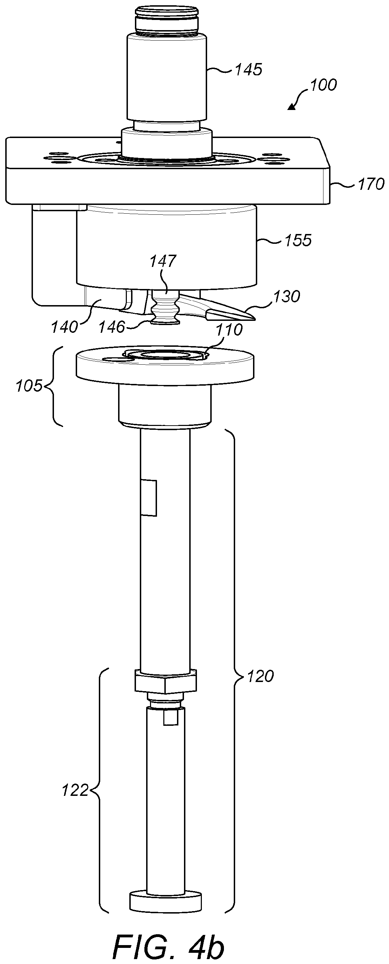

FIGS. 2 and 3 illustrate an example of a mold assembly 200 positioned in a demolding apparatus 100. FIGS. 4a and 4b show the demolding apparatus of FIGS. 2 and 3 before a mold assembly is added to the apparatus.

The demolding apparatus shown in FIGS. 2 and 3 further includes a holder 105. As can be seen in FIGS. 4a and 4b, holder 105 has a recess 110 and an aperture 115. In FIGS. 2 and 3, the mold assembly is positioned in recess 110 of the holder. Also, as shown in FIGS. 2 and 3, the depth of the recess can be arranged so that only a lower part of the second mold portion 210 fits within the recess, while the rest of the mold assembly is situated above the surface of the holder. The recess can be shaped to accommodate the shape of a mold assembly. Aperture 115 (FIG. 4a) can extend vertically through the holder from the base of the recess, and the aperture can be arranged so that a gripper can be positioned and moved vertically in the aperture.

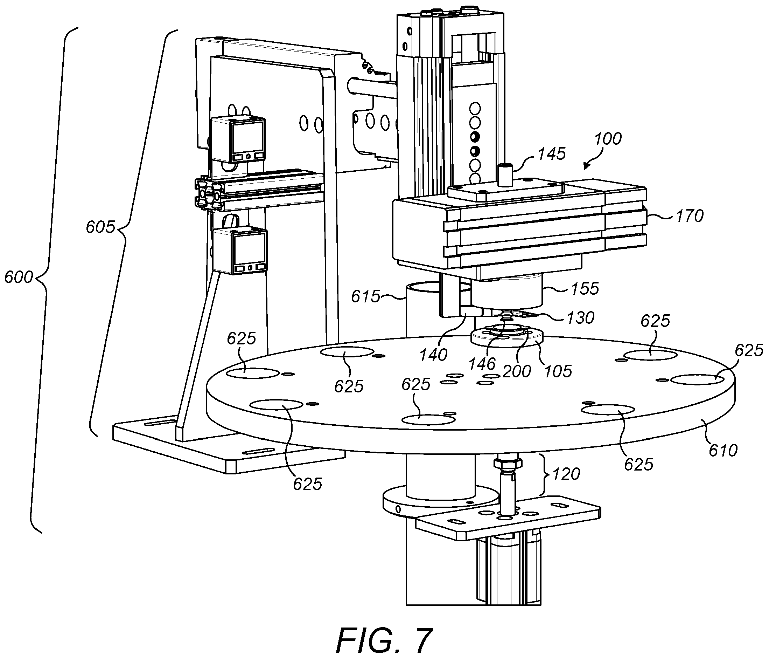

FIG. 2 shows a gripper 120 positioned within, and continuing below, aperture 115. In one or more embodiments, the gripper can have a vacuum head 121 and a robotic arm. In FIG. 2, and with reference to FIG. 1, the vacuum head 121 is shown engaged with a lower surface 212 of a second mold portion 210 of a mold assembly 200. Robotic arm 122 of the gripper can move vacuum head 121 vertically upward, to engage lower surface 212 of second mold portion 210, and vertically downward, away from the second mold portion 210. Vacuum head 121 can be arranged to be connected to robotic arm 122 so it can be moved vertically downward below the lower surface of holder 105, and, where present, downward below the lower surface of a turntable on which the holder is positioned, as shown in FIG. 7. Optionally, when a vacuum source is connected to vacuum head 121 and is turned on, the vacuum head can apply suction to lower surface 212 of the second mold portion 210, to grip the mold assembly and hold it in a stationary position. As shown in FIG. 2, the second mold portion of the mold assembly is held and retained in holder 105.

A separator 130, stopper 140, collector 145, and retaining driver portion 150 can be arranged in the space above holder 105 and, where present, above a mold assembly 200. Each of these elements can be connected directly or indirectly to xyz platform 170.

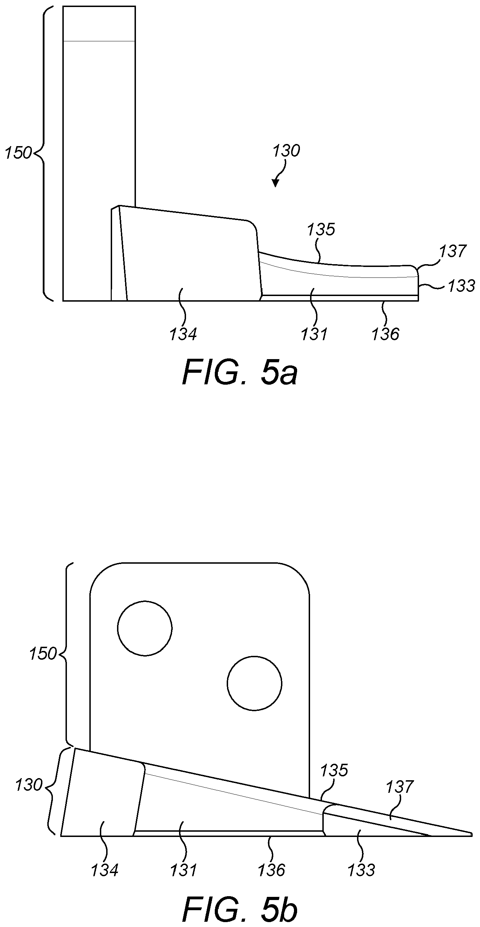

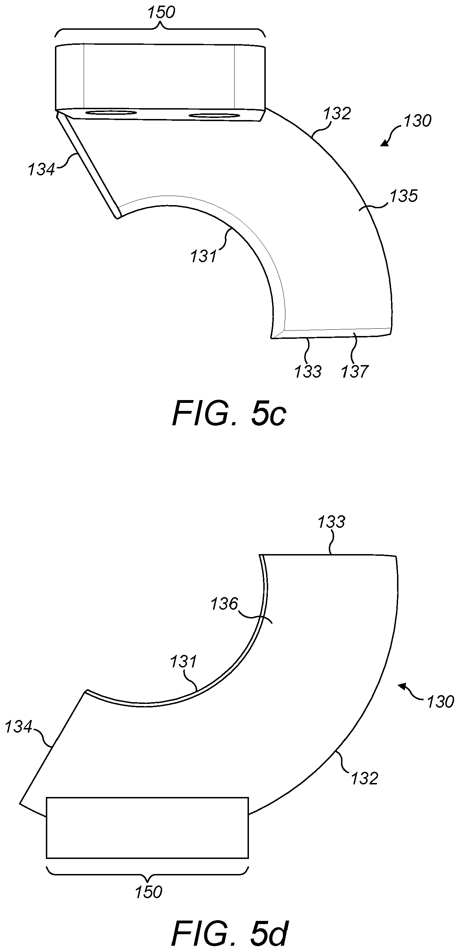

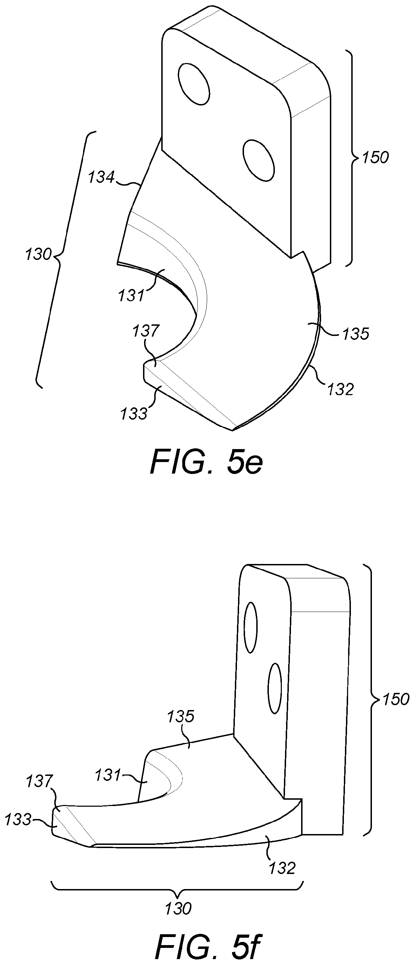

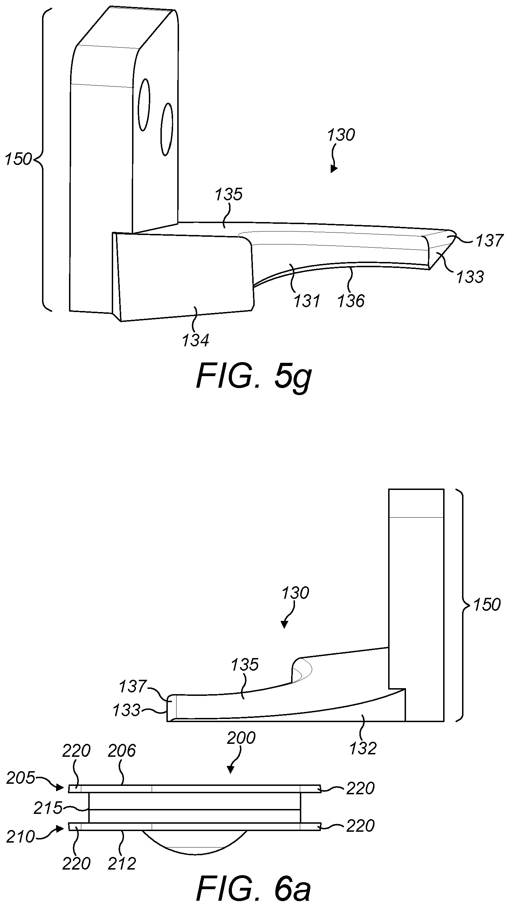

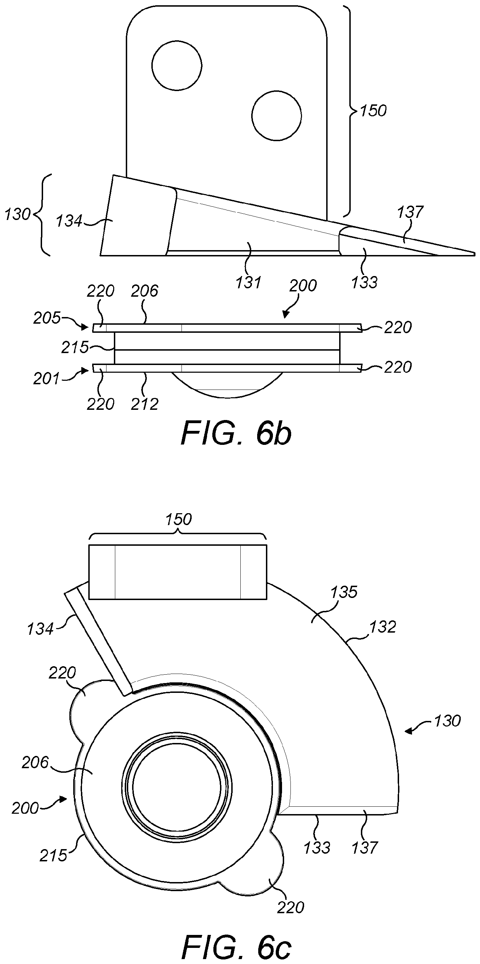

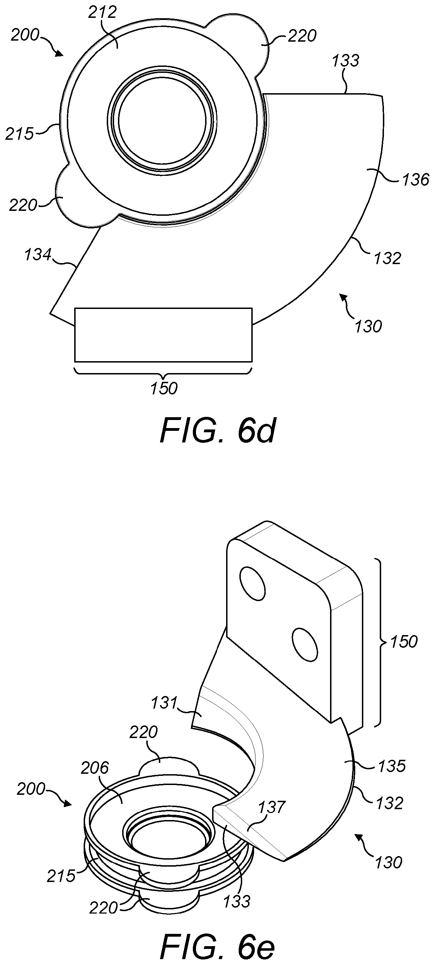

Separator 130 is shown in FIGS. 2 and 3 as a curved wedge. Separator 130 is further shown in more detail from several angles in FIGS. 5a to 5g and shown in relation to a mold assembly 200 in FIGS. 6a to 6e. As shown in FIGS. 5a to 5g, the separator is configured to have an inner circumferential edge 131, an outer circumferential edge 132, a blunt leading end 133, a blunt trailing end 134, a substantially flat sloped upper face 135, and a substantially horizontal lower face 136. The position of the separator shown in FIGS. 2 and 3 is the position of the separator before it is lowered to the surface of holder 105 and before it is rotated to separate a mold assembly 200. The lowering of the separator can be carried out by xyz platform 170, to which the separator can be connected via the retaining driver portion, as shown.

As shown in FIGS. 5a to 5e, separator 130 can be of a partial ring shape, extending around an arc of about 140 degrees. FIGS. 6a to 6e, and, in particular, FIG. 6d, show that the curvature of inner circumferential edge 131 of separator 130 can be shaped to fit around the outer periphery of the mold assembly. The inner and outer circumferential edges of the separator are coaxially aligned. The central axis of the wedge is at the co-axial central axis of the circumferential edges. Inner circumferential edge 131 is thicker than outer circumferential edge 132. Trailing end 134 is thicker than leading end 133. Leading end 133 includes a curved upper edge 137 that curves towards upper face 135 of the separator. The upper face of wedge 135 extends at a continuous angle along the outer circumferential edge. Lower face 136 of the wedge is substantially flat and substantially horizontal. The area connecting the inner circumferential edge and the upper face is curved. The area connecting the outer circumferential edge and the upper face is curved. The upper edge of the blunt leading end of the separator is curved to meet the upper face of the wedge. A portion of the upper face 135, a portion of the outer circumferential edge 132 and a portion of the lower face 136 of the separator 130 are connected to retaining driver portion 150.

In FIGS. 2 and 3, a stopper 140 is positioned adjacent to and abutting trailing end 134 of the separator. The relative positions of stopper 140 and separator 130 are shown before the separator is rotated to separate a mold assembly. Stopper 140 can be connected to xyz platform 170, as illustrated. When separator 130 is rotated by the driver, it is rotated until leading end 133 of the separator abuts stopper 140 on the side of stopper 140 opposite where trailing end 134 had been abutting stopper 140. When leading end 133 makes contact with stopper 140, this prevents further rotation of separator 130. After this rotational movement of separator 130, stopper 140 is positioned adjacent to and abutting leading end 133 of separator 130, and the relative positions of stopper 140 and separator 130 remain in such a position until separator 130 is moved back to its starting position.

A collector 145 (FIG. 2) is shown directly above the gripper in FIGS. 2 and 3. Collector 145 can be positioned at the co-axial central axis of separator 130. Collector 145 can comprise a vacuum head 146 on the end of a robotic arm 147 as illustrated. In FIGS. 2 and 3, vacuum head 146 is shown directly above the center of the mold assembly. Robotic arm 147 of the collector can move the vacuum head vertically up and down. The position of collector 145 shown in FIGS. 2 and 3 is the position before it is lowered toward upper surface 206 of first mold portion 205 of mold assembly 200. The collector can be connected to xyz platform 170. The collector can be lowered and lifted by xyz platform 170 as well as by its robotic arm 147 (FIG. 2).

The driver, as shown in FIGS. 2 and 3, can comprise a retaining driver portion 150 and motor 155. FIGS. 2 and 3 show retaining driver portion 150 as an arm directly connected to separator 130 on a portion of its upper face 135 (FIGS. 5a-5g), on a portion of its outer circumferential edge 132, and on a portion of its lower face 136. Retaining driver portion 150 can be connected to motor 155 and motor 155 can be capable of rotating retaining driver portion 150, which in turn can rotate separator 130 about its co-axial central axis. Retaining driver portion 150 and motor 155 can also be directly connected to xyz stage 170 so that retaining driver portion 150 and separator 130 can be lowered and lifted away from holder 105.

xyz stage 170 (only partially shown in FIGS. 2 and 3, and fully shown in FIG. 7) can be arranged to be connected to separator 130, stopper 140, collector 145, retaining driver portion 150, and motor 155. xyz stage 170 can move such elements of the demolding apparatus as a unit, vertically up and down, for example, to and from the upper surface of holder 105. xyz stage 170 can also move such elements of the demolding apparatus as a unit laterally from above holder 105 to a position away from holder 105, for example, to a position above a waste receptacle 615 for disposal of a separated first mold portion 205, connected to collector 145.

FIG. 7 shows a manufacturing array 600 with demolding apparatus 100 of FIGS. 2 and 3 arranged on a circular turntable 610. In FIG. 7, demolding apparatus 100 is part of a demolding station 605 arranged adjacent to circular turntable 610. Circular turntable 610 can have various other lens manufacturing stations adjacent to it, for manufacturing contact lenses. For example, a delensing station (not shown) can be located at a position apart from the demolding station on the turntable. FIG. 7 also shows an example of a full xyz stage 170 that can move separator 130, stopper 140, collector 145, retaining driver portion 150, and motor 155, as a unit, both vertically and laterally. The lateral movement can be to move such elements as a unit to and back from a waste disposal unit 615 beside the turntable.

FIG. 7 shows a holder 105, eight of which can be positioned, respectively, in apertures 625 in turntable 610. Holders 105 can be connected to the turntable via apertures 625 so that when the turntable rotates, the holders, and any mold portion or mold assembly 200 in each holder, moves with the turntable. As in the embodiment illustrated in FIG. 7, gripper 120 can be below, so as to move vertically beneath, both a holder 105 and turntable 610, thus not impeding rotation of turntable 610.

As previously stated, the present disclosure is also directed to a method of manufacturing a contact lens. The method comprises:
- providing a contact lens mold assembly, the mold assembly comprising a first mold portion, a second mold portion, and a polymerized contact lens body contained between the first mold portion and the second mold portion;
- providing a separator comprising a curved wedge having a leading end, a trailing end, a circumferential outer edge, a circumferential inner edge, a concentric central axis, an increasing thickness circumferentially from the leading end towards the trailing end, and an increasing radial thickness from the outer circumferential edge towards the central axis;
- providing a driver for rotating the separator around its concentric central axis; and
- rotating the separator around its concentric central axis and directing the separator between a part of the first mold portion and another surface, so that the first mold portion and the second mold portion of the mold assembly are separated.

According to the present method, the separating of the two mold portions of the mold assembly is achieved by rotating the separator around its concentric central axis and directing the separator between a part of the first mold portion and another surface. The separating is achieved by the wedge-shaped configuration of the separator moving between those parts. During the rotating and directing, the wedged parts of the separator apply an upwards and forwards force on the upper mold portion relative to the lower mold portion of the mold assembly. The separation is particularly effective due to the curved and doubly wedged shaped of the separator.

The first mold portion can include at least one peripheral flange.

The first mold portion and the second mold portion can be held together at least in part by an interference fit, by a heat weld, or by an ultrasonic weld. In a particular example, the first mold portion and the second mold portion can be held together at least in part by an interference fit.

In one example of the method, rotating the separator can comprise rotating the separator around a length of an outer periphery of the mold assembly. The separator can be rotated leading end first.

The method of the disclosure can further comprise positioning the separator above the mold assembly. Before separation is achieved, the method can comprise moving the separator so that the inner circumferential edge of the separator is beside, and, in a particular example, fits around, a portion of the continuous outer periphery of the mold assembly. Moving the separator can include moving the separator using an xyz stage.

In one example, rotating the separator can direct the separator between a peripheral flange of the first mold portion, for example, a peripheral flange nearest the leading end of the separator, and another surface, for example, an upper surface of a holder or an upper surface of a peripheral flange on a lower mold portion. In a particular example, the other surface can be the upper surface of the holder.

The area around a surface of the leading end of the separator can be configured to fit between a peripheral flange of the first mold portion and the other surface without contacting both or one of the peripheral flange of the first mold portion or the other surface. Methods of the disclosure can further comprise directing such a part between and through the area between the peripheral flange and the other surface. In one example, the area of the separator between the leading end and trailing can be too thick to fit between the peripheral flange of the first mold portion and another surface. When the directing comprises directing a part of the separator, which is too thick to fit between the peripheral flange of the first mold portion and the other surface, between the peripheral flange of the first mold portion and the other surface, the separator will be in contact with the peripheral flange of the first mold portion and the other surface, and the separator will force the peripheral flange upwards and forwards in the direction of rotation of the separator. The force the separator applies to the peripheral flange of the upper mold portion during the directing can move the first mold portion relative to the second mold portion. During the directing, the separator can continue rotating and directing an even thicker part of the separator between the peripheral flange of the first mold portion and the other surface. The result is that the separator is directed further upward and forward, forcing the upper peripheral flange and, in turn, the upper mold portion of the mold assembly, upwardly. Eventually, the upwards and forwards force on the first mold portion disconnects the connection between the first mold portion and the second mold portion so that the first mold portion and the second mold portion are separated. For example, the upwards and forwards force on the first mold portion can disconnect an interference fit connection between the first mold portion and the second mold portion.

In an example of the disclosed method, following the separating, the separated first mold portion remains sitting on the surface of the second mold portion. This can be because, as the separator rotates around the mold assembly, often there is no significant lateral movement of the separator or assembly during the demolding process. Therefore, in such methods according to the present disclosure, the separated portions can remain together following the demolding, often with the upper demolded mold portion resting on the lower mold portion. Having the mold portions of the demolded mold assembly remain in this position following the demolding allows for rapid and efficient automation of the process of removing a mold portion to fully open the assembly, for example, carried out by a collector. It has been found that use of a linear wedge leads to more significant variation in the positions of the separated mold portions of a mold assembly, because, for example, the separated upper mold portion can be knocked off the lower mold portion during the demolding, or can move onto the linear wedge and end up some distance from its original position and from the separated lower mold portion.

In one or more examples of the method, providing the contact lens mold assembly can comprise providing the contact lens mold assembly in a holder. For example, the contact lens mold assembly can be provided in the recess of a holder, or on a projection on a surface of a holder. In a particular example, the contact lens mold assembly can be provided in a recess holder, and the recess can be arranged such that only a lower part of the second mold portion is within the recess. In methods where the contact lens mold assembly is provided in the recess of a holder, the directing can be directing the separator between a part of the first mold portion, for example, a peripheral flange, and the upper surface of the holder.

The method of the disclosure can further comprise retaining and holding the mold assembly in a stationary position using a gripper while the action of rotating and directing the separator directs the separator between a part of the first mold portion and another surface. In such a method, the gripper can retain and hold the mold assembly in a stationary position, for example, in a stationary position in or on the holder of a mold assembly. The second mold portion of the mold assembly can be a part that the gripper engages during the retaining and holding. The gripper can comprise: a vacuum head; a suction head; one or more gripping fingers; hooks or loops; an interference fit; or any other non-permanent type of connection. The method can further comprise moving the part of the gripper that performs the gripping function, for example, moving a robotic arm that is configured to move vertically and/or laterally.

When a gripper is provided, the method of the disclosure can further comprise the step of engaging the gripper with the mold assembly as at least part of the act of holding and retaining the mold assembly in a stationary position while rotating and directing the separator between a part of the first mold portion and another surface. The method of the disclosure can also further comprise the step of the disengaging the gripper from the mold assembly after separating the mold assembly. Where a positioner is provided as part of the gripper, the method of the disclosure can also further comprise moving the gripper to and from the mold assembly. In methods where the gripper is provided with a vacuum head or source, methods of the disclosure can include one or more steps of turning on or off a vacuum connected to the vacuum head of the gripper to engage or disengage the vacuum head from the mold assembly.

In methods of the disclosure where the method comprises engaging a gripper as at least part of the act of holding and retaining the mold assembly, the holding and retaining the mold assembly can comprise holding and retaining the mold assembly in a stationary position while directing the separator between the first mold portion and another surface. It has been found that such a method is particularly effective. This is believed to be due to the upwards force of the separator being fully directed into separating the mold assembly portions, as lifting of the mold assembly is prevented.

In methods of the disclosure that comprise providing the contact lens mold assembly in a holder and providing a gripper, the gripper can be provided in or beneath an aperture extending through the body of the holder in a location where the recess is positioned. In such an example, the method of the present disclosure can comprise a step of moving the gripper from below or within the aperture towards and to the lower surface of the mold assembly before the separation, and moving the gripper below and away from the lower surface of the mold assembly, through and optionally out of, the aperture after separation, or after opening, of the mold assembly.

The method of the disclosure can further comprise providing a collector and opening the mold assembly by removing the first mold portion of the separated mold assembly from the second mold portion, using the collector. The collector can comprise a collection head, for example, a vacuum head, and a positioner, for example, a robotic arm. The method can further comprise: removing the first mold portion of the separated mold assembly from the second mold portion by moving the collection head, for example, a vacuum head, to a position on or slightly above the upper surface of the first mold portion; picking up the first mold portion onto the collection head, for example, using a vacuum head to apply suction to the upper surface of the first mold portion through the vacuum head to carry the first mold portion onto the vacuum head; and moving the collection head, with the first mold portion carried on it, away from the second mold portion. Moving the collection head can comprise moving the collection head using the positioner, for example, using a robotic arm, using an, xyz stage, or using both a robotic arm of a collector and an xyz stage.

The method of the disclosure can further comprise a step of moving a separated mold portion to a waste receptacle. The mold portion that is moved to the waste receptacle can be the first mold portion, the second mold portion, or both. Moving the separated mold portion can comprise carrying the mold portion on a vacuum head that is part of a collector. The collector can then be moved by an xyz stage to a location above a waste receptacle, and the collector can drop the mold portion into the waste receptacle.

The method of the disclosure can comprise providing a stopper for stopping the rotating of the separator and/or stopping the retaining driver portion of the driver after rotating the separator around the concentric central axis of the separator. The method of the disclosure can comprise a step of stopping rotation of the separator after separating the mold assembly, for example, after directing the separator between a part of the upper mold portion and another surface and separating the mold portions of the mold assembly. The stopper can stop the rotating of the separator before the separator has completed one full rotation, for example, before one complete rotation around the periphery of a mold portion. During the stopping, the stopper can remain stationary. The stopping can comprise stopping the separator and/or stopping the retaining driver portion of the driver. The method of the disclosure can comprise a step of stopping rotation of the separator using the stopper and rotating the separator back to the position it was in before the rotating began.

The method of the disclosure can comprise providing a rotation stopper, abutment, or other means, herein referred to as a flange tab, for preventing significant lateral movement of a mold portion during the rotating and directing, for example, for preventing significant latitudinal movement of the first mold portion, including preventing significant rotational or twisting movement of the first mold portion. The method of the disclosure can comprise a step of contacting a peripheral flange of the upper mold portion with a flange tab and preventing significant latitudinal movement, for example, preventing rotating or twisting, including rotating or twisting of 20° to 360°, or of 10° to 360°, of the first mold portion when the separator is directed between a part of the upper mold assembly, for example, a peripheral flange, and another surface, for example, the upper surface of a holder. The method of the disclosure can further comprise positioning the flange tab adjacent to and/or abutting a peripheral flange of the first mold assembly, for example, the peripheral flange of the first mold assembly that is furthest from the leading end of the separator. The positioning of the flange tab can comprise positioning the flange tab at the side of the peripheral flange furthest from the leading end and/or nearest the trailing end of the separator. The positioning can comprise positioning the flange tab so as to only contact a peripheral flange of the first mold portion.

It has been found that the method of the disclosure is particularly effective when the method comprises contacting a peripheral flange of the upper mold portion with a flange tab, and preventing significant latitudinal movement of the first mold portion, for example, preventing rotating or twisting of the first mold portion. Both the upwards and forwards force of the separator are directed towards separating the mold assembly portions, which increases the force available for separating the mold assembly portions without increasing the rotational force used.

The method of the disclosure can be free of a step of contacting the mold assembly with a liquid, and/or free of a step of heating the mold assembly prior to or during the rotating. The method can further be free of a step of using a compound that reduces a force required to separate the first mold portion and the second mold portion during the rotating and directing. It has been found that the increased force applied to the mold assembly during the rotating and directing can make it unnecessary to use additional steps in order to reduce the force required to separate the first mold portion and the second mold portion during the rotating and directing. For example, it is not necessary to contact the mold assembly with a liquid, or heat the mold assembly, prior to or during the rotating and directing, in order to reduce the separation force required. The method can be free of a step of contacting the mold assembly with a liquid prior to or during the rotating. The method can be free of a step of heating the mold assembly prior to or during the rotating.

Similarly, it can be unnecessary to use a compound that reduces the force required to separate the first mold portion and the second mold portion, from each other. For, example, there is no need for applying a surfactant or a demolding aid to one or both of the mold portions prior to filling and closing the mold assembly, and no need for adding a surfactant or a demolding aid to the polymerizable composition used to form the lens body. The method can be free of a step of using a compound that reduces a force required to separate the first mold portion and the second mold portion during the rotating and directing. Whether or not use of such a compound reduces the demolding force required can be determined by comparing the force required to separate a first mold assembly formed by a method using the compound with the force required to separate a second mold assembly formed by an identical method except without using the compound. If a force required to separate the second mold assembly is at least 5% or 10% greater than the force required to separate the first mold assembly, a compound can be used and/or useful to reduce the force required for separation.

The method of the disclosure can further comprise providing an xyz stage for moving one or more of the separator, driver, stopper, flange tab, and/or collector vertically and laterally. The method of the disclosure can further comprise moving the separator to the outer periphery of a mold portion, for example, using an xyz stage. In methods that include positioning the mold assembly in a holder, the method can comprise moving the separator to the outer periphery of a mold assembly and to the upper surface of a holder by using an xyz stage. The method of the disclosure can comprise moving the separator to the outer periphery of a mold portion and optionally moving the separator to the upper surface of a holder when the mold assembly is in a holder. The method can comprise moving the driver and/or, when present, the stopper, and/or collector, and/or the flange tab, with the separator, using an xyz stage.

In one example of the method of the disclosure, the step of providing a contact lens mold assembly can further comprise the steps of: providing a first mold portion and a second mold portion; filling a polymerizable composition into at least one of the first mold portion and the second mold portion; closing the first mold portion and the second mold portion to form a mold assembly with the polymerizable composition contained in a lens-shaped cavity of the mold assembly; and curing the polymerizable composition in the closed mold assembly to form a polymeric lens body in the closed mold assembly.

After separating the mold portions, the method can further comprise the steps of: delensing the polymeric lens body from one or both of the separated mold portions; optionally washing or extracting or hydrating, or any combination thereof, the released polymeric lens body; placing the released polymeric lens body in a contact lens blister package along with a packaging solution; sealing the blister package; and sterilizing the sealed blister package to form a finished contact lens package. In one example, the method of the disclosure can be carried out by the above-mentioned demolding apparatus. In this example of the method, and with reference to the drawings, particularly FIGS. 1 and 2, before the demolding apparatus begins the demolding method, a closed mold assembly 200 with a contact lens in its recess 201 sits in a recess 110 of a holder 105. As shown in FIG. 2, only a lower portion 210 of mold assembly 200 is within the recess. The remainder of mold assembly 200 can be above the upper surface of holder 105. Holder 105 and mold assembly 200 can be positioned at a distance beneath separator 130, stopper 140, collector 145, and retaining driver portion 150. The concentric central axis of separator 130 can be aligned with the center of mold assembly 200. Gripper 120 can be aligned with, and located beneath, an aperture 115 of holder 105. Vacuum head 121 of gripper 120 can be positioned at a distance below lower surface 212 of mold assembly 200.

When the process of demolding begins, a robotic arm 122 (FIG. 2) of gripper 120 can move vacuum head 121 of gripper 120 vertically upwards into and through the aperture in the holder so that vacuum head 121 can touch or almost touch lower surface 212 of lower portion 210 of mold assembly 200. The vacuum source connected to vacuum head 121 can be turned on. Due to the suction of the vacuum, vacuum head 121 can connect with and grip lower surface 212 of mold assembly 200 to hold and retain mold assembly 200 in a fixed, stationary position in the recess of the holder (the peripheral flanges 220B of the second mold portion 210 prevent rotation of the mold assembly 200 in the recess by acting against the side walls of the recess). The grip on lower surface 212 of the mold assembly can continue during separation and opening of mold assembly 200. After the mold assembly is separated, gripper 120 can hold only second mold portion 210 in holder 105. First mold portion 205 is no longer held. Gripper 120 can hold second mold portion 210 until first mold portion 205 is removed from upper surface 211 of second mold portion 210 by collector 145. Following this, the vacuum source can be switched off and vacuum head 121 can be moved vertically downward by the robotic arm, back to its original position.

Once vacuum head 121 of gripper 120 is holding mold assembly 200 in the recess of holder 105, separator 130, stopper 140, collector 145, retaining driver portion 150, and motor 155 can be vertically lowered by xyz stage 170 towards holder 105 and mold assembly 200. Those elements can be lowered as a unit until lower face 136 of separator 130 rests on or slightly above the upper surface of holder 105. The entire length of the inner circumferential edge of separator 130 can fit around, and close to or against, a part of the continuous outer periphery 215 of mold assembly 200 that is not within the recess of holder 105. The lowering movement of xyz stage 170 can position collector 145 to be slightly above upper surface 206 of upper mold assembly 205. The lowering movement of xyz stage 170 can position a flange tab, if present, adjacent to and abutting the peripheral flange 220A of first mold assembly 205 furthest from leading end 133 of separator 130 at the side of that peripheral flange 220A furthest from leading end 133 of separator 130.

Separator 130 can then be rotated around a length of the continuous outer periphery 215 of mold assembly 200, leading end 133 first, by retaining driver portion 150 driven by motor 155. Stopper 140 can prevent rotation of peripheral flange 220A of the first mold portion 205 past the point of stopper 140.

When separator 130 is rotated, leading end 133 and a portion of the area between leading end 133 and trailing end 134 can be directed between the peripheral flange 220A of first mold portion 205 nearest leading end 133 of separator 130 and the upper surface of holder 105. The blunt surface of leading end 133 can fit between peripheral flange 220A and upper surface of holder 105. However, as the thickness of the separator 130 increases from the blunt surface of leading end 133 toward trailing end 134, there comes a point between leading end 133 and trailing end 134 that is too thick to fit between peripheral flange 220A and the upper surface of holder 105. At that point and in the area after that point, separator 130 forces peripheral flange 220A upward and pushes it in the direction of the rotation of separator 130. The force on peripheral flange 220A forces first mold portion 205 upward and forward relative to second mold portion 210 and the peripheral flange 220B of the second mold portion. As second mold portion 210 is held in holder 105 by gripper 120, it can remain stationary throughout the rotating. The other peripheral flange 220A of first mold portion 205 can be held in position by a flange tab (when present) so first mold portion 205 cannot twist or rotate. Eventually, the upward and forward force on first mold portion 205 disconnects the connection for holding the portions of the contact lens mold assembly together between first mold portion 205 and second mold portion 210 so that first mold portion 205 and second mold portion 210 are separated. For example, the upward and forward force on first mold portion 205 can: disconnect an interference fit between first mold portion 205 and second mold portion 210; break welds between first mold portion 205 and second mold portion 210; loosen the adhesion of the polymerized lens body to first mold portion 205, or to second mold portion 210, or to both; or cause any combination of such effects. The separated first mold portion 205 can then be sitting on the surface of second mold portion 210.

After the mold portions have been separated, vacuum head 146 of collector 145 can be moved vertically downward by robotic arm 147 until it comes into contact with first mold portion 205. A vacuum source can be turned on and vacuum head 146 can engage with and pick up first mold portion 205 with vacuum head 146. Robotic arm 147 can then move vertically upward to its original position relative to the separator, removing first mold portion 205 from upper surface 211 of second mold portion 210. Following this, xyz stage 170 can move separator 130, stopper 140, collector 145, retaining driver portion 150, and motor 155 upward as a unit.

Motor 155 can then drive retaining driver portion 150 to rotate separator 130 backward, trailing end 134 first, to the original position of separator 130 shown in FIGS. 2 and 3. First mold portion 205 can be released from collector 145 by turning off the vacuum to vacuum head 146.

After a mold assembly 200 has been separated, second mold portion 210, which will contain a contact lens body 201, can be removed from holder 105 for further processing, and replaced with a new mold assembly 200 to be separated. Alternatively, holder 105 and the separated mold portion can be moved from beneath separator 130 and replaced with a new holder 105 having a new closed mold assembly 200 in its recess 110.

FIG. 7 shows demolding apparatus 100 described above as part of a contact lens processing array 600 on a circular turntable 610. When demolding apparatus 100 is arranged in an array as shown in FIG. 7, after a mold assembly 200 has been separated, xyz stage 170 can move separator 130, stopper 140, collector 145, retaining driver portion 150, and motor 155, as a unit, such that collector 145 carries a first mold portion 205 (FIG. 1) to above a waste receptacle 615. When collector 145 is positioned above waste receptacle 615, the vacuum source connected to vacuum head 146 of collector 145 can be turned off. This stops the suction holding the first mold portion to vacuum head 146 so the first mold portion can be released and fall into waste receptacle 615 for disposal. xyz stage 170 can then move separator 130, stopper 140, collector 145, retaining driver portion 150, and motor 155, as a unit, back to their original positions.

In one example, at the same time that xyz stage 170 moves to waste receptacle 615, turntable 610 can rotate to move first holder 105 with separated second mold assembly 210 to another manufacturing station, for example, to a delensing station. In the same movement of turntable 610, a new holder, with a new mold assembly to be separated, can be moved to the original position of first holder 105. The demolding method using the demolding apparatus shown in FIG. 7 can then be repeated on the new mold assembly.

While the present invention has been described and illustrated with reference to particular embodiments, it will be appreciated by those of ordinary skill in the art that the invention lends itself to many different variations not specifically illustrated herein.

In the foregoing description, where integers or elements are mentioned which have known, obvious, or foreseeable equivalents, then such equivalents are herein incorporated as if individually set forth. Reference should be made to the claims for determining the true scope of the present invention, which should be construed so as to encompass any such equivalents.

## Claims

1. A contact lens demolding apparatus (100) comprising:
a separator (130), comprising a curved wedge having a leading end (133), a trailing end (134), a circumferential outer edge (132), a circumferential inner edge (131), a concentric central axis, an increasing thickness circumferentially from the leading end (133) towards the trailing end (134), and an increasing radial thickness from the outer circumferential edge (132) towards the central axis; and
a driver for rotating the separator (130) around its concentric central axis.

2. The contact lens demolding apparatus as claimed in claim 1, further comprising a contact lens mold assembly (200) positioned adjacent the separator (130), wherein the contact lens mold assembly (200) comprises a first mold portion (205), a second mold portion (210), and a polymerized contact lens body contained between the first mold portion (205) and the second mold portion (210).

3. The contact lens demolding apparatus as claimed in claim 2, wherein the first mold portion (205) and second mold portion (210) of the mold assembly (200) are joined together, at least in part, by an interference fit.

4. The contact lens demolding apparatus as claimed in claim 2 or claim 3, wherein the first mold portion (205) comprises at least one peripheral flange (220), for example two peripheral flanges, and optionally further comprises a flange tab configured for preventing rotational movement of the first or second mold portion (205, 210) during demolding of the mold assembly (200).

5. The contact lens demolding apparatus as claimed in any one of claims 2 to 4, wherein the circumferential inner edge (131) of the separator (130) has a curvature selected to fit around an outer periphery of the mold assembly (200).

6. The contact lens demolding apparatus as claimed in any one of claims 1 to 5, wherein the driver comprises a retaining driver portion (150) connected to the separator (130), and a motor (155) for rotationally driving the retaining driver portion (150).

7. The contact lens demolding apparatus as claimed in any one of claims 2 to 6, wherein the apparatus further comprises a holder (105) for holding the mold assembly (200), wherein the holder (105) optionally comprises a recess (110) that is complementary to an external shape of the mold assembly (200).

8. The contact lens demolding apparatus as claimed in any one of claims 2 to 7, wherein the apparatus further comprises a gripper (120) for retaining the mold assembly (200) in a stationary position.

9. The contact lens demolding apparatus as claimed in any one of claims 2 to 8, wherein the apparatus further comprises a collector (145) for collecting a separated first mold portion (205), a separated second mold portion (210), or both, of a separated mold assembly (200).

10. A method of manufacturing a contact lens, comprising:
- providing a contact lens mold assembly (200), the mold assembly (200) comprising a first mold portion (205), a second mold portion (210), and a polymerized contact lens body contained between the first mold portion (205) and the second mold portion (210);
- providing a separator (130) comprising a curved wedge having a leading end (133), a trailing end (134), a circumferential outer edge (132), a circumferential inner edge (131), a concentric central axis, an increasing thickness circumferentially from the leading end (133) towards the trailing end (134), and an increasing radial thickness from the outer circumferential edge (132) towards the central axis;
- providing a driver for rotating the separator (130) around its concentric central axis; and
- rotating the separator (130) around its concentric central axis and directing the separator (130) between a part of the first mold portion (205) and another surface, to thereby separate the first mold portion (205) and the second mold portion (210) of the mold assembly (200), from one another.

11. The method according to claim 10, wherein, prior to the rotating, the first mold portion (205) and the second mold portion (210) are held together, at least in part, by an interference fitting.

12. The method according to claim 10 or 11, wherein the first mold portion (205) includes at least one peripheral flange (220), and wherein optionally the providing comprises providing the contact lens mold assembly (200) in a holder (105) and the directing comprises directing the separator (130) between the at least one peripheral flange (220) of the first mold portion (205) and an upper surface of the holder (105).

13. The method according to any one of claims 10 to 12, further comprising, during or following the rotating, using a collector head (146) to collect the first mold portion (205) and carry it away from the second mold portion (210) and/or, during the rotating, using a gripper (120) to hold and retain a portion of the mold assembly (200) in a stationary position.

14. The method according to any one of claims 10 to 13, wherein, following the separating, the separated first mold portion (205) remains sitting on a surface of the separated second mold portion (210).

15. The method according to any one of claims 10 to 14, wherein the method is free of a step of contacting the mold assembly (200) with a liquid, and free of a step of heating the mold assembly (200), prior to and during the rotating and directing and/or wherein the method is free of a step of using a compound that reduces a force required to separate the first mold portion (205) and the second mold portion (210), from one another, during the rotating.

## Patentansprüche

1. Vorrichtung (100) zum Entnehmen von Kontaktlinsen, umfassend:
einen Separator (130), mit einem gekrümmten Keil mit einem vorderen Ende (133), einem hinteren Ende (134), einer Außenumfangskante (132), eine Innenumfangskante (131), einer konzentrischen Mittelachse, einer zunehmenden Dicke in Umfangsrichtung vom vorderen Ende (133) in Richtung des hinteren Endes (134), und einer zunehmenden radialen Dicke der Außenumfangskante (132) in Richtung der Mittelachse; und
einen Treiber zum Drehen des Separators (130) um seine konzentrische Mittelachse.

2. Vorrichtung zum Entnehmen von Kontaktlinsen nach Anspruch 1, ferner mit einer Kontaktlinsenformanordnung (200), die neben dem Separator (130) angeordnet ist, wobei die Kontaktlinsenformanordnung (200) einen ersten Formabschnitt (205), einen zweiten Formabschnitt (210) und einen polymerisierten Kontaktlinsenkörper umfasst, der zwischen dem ersten Formabschnitt (205) und dem zweiten Formabschnitt (210) enthalten ist.

3. Vorrichtung zum Entnehmen von Kontaktlinsen nach Anspruch 2, wobei der erste Formabschnitt (205) und der zweite Formabschnitt (210) der Formanordnung (200) zumindest teilweise durch eine Presspassung miteinander verbunden sind.

4. Vorrichtung zum Entnehmen von Kontaktlinsen nach Anspruch 2 oder Anspruch 3, wobei der erste Formabschnitt (205) mindestens einen Umfangsflansch (220), beispielsweise zwei Umfangsflansche, und optional ferner eine Flanschlasche umfasst, die so konfiguriert ist, dass sie eine Drehbewegung des ersten oder zweiten Formabschnitts (205, 210) während der Entnahme aus der Formanordnung (200) verhindert.

5. Vorrichtung zum Entnehmen von Kontaktlinsen nach einem der Ansprüche 2 bis 4, wobei die Innenumfangskante (131) des Separators (130) eine Krümmung aufweist, die so gewählt ist, dass sie um einen Außenumfang der Formanordnung (200) passt.

6. Vorrichtung zum Entnehmen von Kontaktlinsen nach einem der Ansprüche 1 bis 5, wobei der Treiber einen haltenden Treiberabschnitt (150), der mit dem Separator (130) verbunden ist, und einen Motor (155) zum drehenden Antreiben des haltenden Treiberabschnitts (150) umfasst.

7. Vorrichtung zum Entnehmen von Kontaktlinsen nach einem der Ansprüche 2 bis 6, wobei die Vorrichtung ferner einen Halter (105) zum Halten der Formanordnung (200) aufweist, wobei der Halter (105) optional eine Aussparung (110) aufweist, die zu einer äußeren Form der Formanordnung (200) komplementär ist.

8. Vorrichtung zum Entnehmen von Kontaktlinsen nach einem der Ansprüche 2 bis 7, wobei die Vorrichtung ferner einen Greifer (120) zum Halten der Formanordnung (200) in einer stationären Position umfasst.

9. Vorrichtung zum Entnehmen von Kontaktlinsen nach einem der Ansprüche 2 bis 8, wobei die Vorrichtung ferner einen Aufnehmer (145) zum Aufnehmen eines getrennten ersten Formabschnitts (205), eines getrennten zweiten Formabschnitts (210) oder beider, von einer getrennten Formanordnung (200) aufweist.

10. Verfahren zur Herstellung einer Kontaktlinse, umfassend:
- Bereitstellen einer Kontaktlinsenformanordnung (200), wobei die Formanordnung (200) einen ersten Formabschnitt (205), einen zweiten Formabschnitt (210) und einen polymerisierten Kontaktlinsenkörper umfasst, der zwischen dem ersten Formabschnitt (205) und dem zweiten Formabschnitt (210) enthalten ist;
- Bereitstellen eines Separators (130) mit einem gekrümmten Keil mit einem vorderen Ende (133), einem hinteren Ende (134), einer Außenumfangskante (132), einer Innenumfangskante (131), einer konzentrischen Mittelachse, einer zunehmenden Dicke in Umfangsrichtung vom vorderen Ende (133) in Richtung des hinteren Endes (134), und einer zunehmenden radialen Dicke der Außenumfangskante (132) in Richtung der Mittelachse;
- Bereitstellen eines Treibers zum Drehen des Separators (130) um seine konzentrische Mittelachse; und
- Drehen des Separators (130) um seine konzentrische Mittelachse und Führen des Separators (130) zwischen einem Teil des ersten Formabschnitts (205) und einer anderen Oberfläche, um dadurch den ersten Formabschnitt (205) und den zweiten Formabschnitt (210) der Formanordnung (200) voneinander zu trennen.

11. Verfahren nach Anspruch 10, wobei vor dem Drehen der erste Formabschnitt (205) und der zweite Formabschnitt (210) zumindest teilweise durch Presspassung zusammengehalten werden.

12. Verfahren nach Anspruch 10 oder 11, wobei der erste Formabschnitt (205) mindestens einen Umfangsflansch (220) umfasst, und wobei das Bereitstellen optional das Bereitstellen der Kontaktlinsenformanordnung (200) in einem Halter (105) umfasst, und das Führen das Führen des Separators (130) zwischen den mindestens einen Umfangsflansch (220) des ersten Formabschnitts (205) und eine Oberseite des Halters (105) umfasst.

13. Verfahren nach einem der Ansprüche 10 bis 12, ferner umfassend, den ersten Formabschnitt (205) während oder nach dem Drehen unter Verwendung eines Aufnehmkopfes (146) aufzunehmen und von dem zweiten Formabschnitt (210) zu entfernen und / oder während des Drehens einen Teil der Formanordnung (200) mit einem Greifer (120) in einer stationären Position zu halten oder zurückzuhalten.

14. Verfahren nach einem der Ansprüche 10 bis 13, wobei nach dem Trennen der abgetrennte erste Formabschnitt (205) auf einer Oberfläche des abgetrennten zweiter Formabschnitts (210) verbleibt.

15. Verfahren nach einem der Ansprüche 10 bis 14, bei dem das Verfahren frei von einem Schritt des Inkontaktbringens der Formanordnung (200) mit einer Flüssigkeit und frei von einem Schritt des Erhitzens der Formanordnung (200) vor und während des Drehens und Führens ist und / oder wobei das Verfahren frei von einem Schritt der Verwendung einer Verbindung ist, die eine erforderliche Kraft reduziert, die benötigt wird, den ersten Formabschnitt (205) und den zweiten Formabschnitt (210) während des Drehens voneinander trennen.

## Revendications

1. Appareil de démoulage de lentilles de contact (100) comprenant :
- un séparateur (130), comprenant une cale incurvée ayant une extrémité d'attaque (133), une extrémité arrière (134), un bord externe circonférentiel (132), un bord interne circonférentiel (131), un axe central concentrique, une épaisseur croissante dans la circonférence depuis l'extrémité d'attaque (133) vers l'extrémité arrière (134), et une épaisseur radiale croissante depuis le bord externe circonférentiel (132) vers l'axe central et
- un élément d'entraînement pour mettre en rotation le séparateur (130) autour de son axe central concentrique.

2. Appareil de démoulage de lentilles de contact selon la revendication 1, comprenant en outre un ensemble moule de lentilles de contact (200) positionné pour être adjacent au séparateur (130), dans lequel l'ensemble moule de lentilles de contact (200) comprend une première partie de moule (205), une seconde partie de moule (210), et un corps de lentille de contact polymérisé contenu entre la première partie de moule (205) et la seconde partie de moule (210).

3. Appareil de démoulage de lentilles de contact selon la revendication 2, dans lequel la première partie de moule (205) et la seconde partie de moule (210) de l'ensemble moule (200) sont réunies ensemble, au moins en partie, par un ajustement serré.

4. Appareil de démoulage de lentilles de contact selon la revendication 2 ou la revendication 3, dans lequel la première partie de moule (205) comprend au moins une bride périphérique (220), par exemple deux brides périphériques, et, en option, comprend en outre une patte de bride configurée pour empêcher tout mouvement de rotation de la première ou de la seconde partie de moule (205, 210) pendant le démoulage de l'ensemble moule (200).

5. Appareil de démoulage de lentilles de contact selon l'une quelconque des revendications 2 à 4, dans lequel le bord interne circonférentiel (131) du séparateur (130) présente une courbure choisie pour se positionner autour d'une périphérie externe de l'ensemble moule (200).

6. Appareil de démoulage de lentilles de contact selon l'une quelconque des revendications 1 à 5, dans lequel l'élément d'entraînement comprend une partie de retenue de l'élément d'entraînement (150) raccordée au séparateur (130), et un moteur (155) pour entraîner en rotation la partie de retenue de l'élément d'entraînement (150).

7. Appareil de démoulage de lentilles de contact selon l'une quelconque des revendications 2 à 6, dans lequel l'appareil comprend en outre un support (105) pour tenir l'ensemble moule (200), dans lequel le support (105) comprend, en option, un évidement (110) qui est complémentaire à une forme externe de l'ensemble moule (200).

8. Appareil de démoulage de lentilles de contact selon l'une quelconque des revendications 2 à 7, dans lequel l'appareil comprend en outre un dispositif de préhension (120) pour retenir l'ensemble moule (200) dans une position fixe.

9. Appareil de démoulage de lentilles de contact selon l'une quelconque des revendications 2 à 8, dans lequel l'appareil comprend en outre un collecteur (145) permettant de collecter une première partie de moule (205) séparée, une seconde partie de moule (210) séparée, ou les deux, d'un ensemble moule (200) séparé.

10. Procédé de fabrication de lentilles de contact, comprenant :
- la fourniture d'un ensemble moule de lentilles de contact (200), l'ensemble moule (200) comprenant une première partie de moule (205), une seconde partie de moule (210), et un corps de lentille de contact polymérisé contenu entre la première partie de moule (205) et la seconde partie de moule (210),
- la fourniture d'un séparateur (130) comprenant une cale incurvée ayant une extrémité d'attaque (133), une extrémité arrière (134), un bord externe circonférentiel (132), un bord interne circonférentiel (131), un axe central concentrique, une épaisseur croissante dans la circonférence depuis l'extrémité d'attaque (133) vers l'extrémité arrière (134), et une épaisseur radiale croissante depuis le bord externe circonférentiel (132) vers l'axe central,
- la fourniture d'un élément d'entraînement (150) pour la mise en rotation du séparateur (130) autour de son axe central concentrique et
- la mise en rotation du séparateur (130) autour de son axe central concentrique et l'orientation du séparateur (130) entre une portion de la première partie de moule (205) et une autre surface, afin de séparer ainsi la première partie de moule (205) et la seconde partie de moule (210) de l'ensemble moule (200), l'une de l'autre.

11. Procédé selon la revendication 10, dans lequel, avant la mise en rotation, la première partie de moule (205) et la seconde partie de moule (10) sont tenues ensemble, au moins en partie, par un ajustement serré.

12. Procédé selon la revendication 10 ou 11, dans lequel la première partie de moule (205) inclut au moins une bride périphérique (220), et dans lequel, en option, la fourniture comprend la fourniture de l'ensemble moule de lentilles de contact (200) dans un support (105) et l'orientation comprend l'orientation du séparateur (130) entre la ou les bride(s) périphérique(s) (220) de la première partie de moule (205) et une surface supérieure du support (105).

13. Procédé selon l'une quelconque des revendications 10 à 12, comprenant en outre, pendant ou à la suite de la rotation, l'utilisation d'une tête collectrice (146) permettant de collecter la première partie de moule (205) et de l'emporter à distance de la seconde partie de moule (210) et/ou, pendant la rotation, l'utilisation d'un dispositif de préhension (120) pour tenir et retenir une partie de l'ensemble moule (200) dans une position fixe.

14. Procédé selon l'une quelconque des revendications 10 à 13, dans lequel, à la suite de la séparation, la première partie de moule (205) séparée reste en appui sur une surface de la seconde partie de moule (210) séparée.

15. Procédé selon l'une quelconque des revendications 10 à 14, dans lequel le procédé ne comprend pas une étape consistant à mettre en contact l'ensemble moule (200) avec un liquide, et ne comprend pas une étape consistant à chauffer l'ensemble moule (200), avant et pendant la mise en rotation et l'orientation et/ou dans lequel le procédé ne comprend pas l'utilisation d'un composé qui réduit une force requise pour séparer la première partie de moule (205) et la seconde partie de moule (210), l'une de l'autre, pendant la rotation.
